# EUROPÄISCHE PATENTSCHRIFT

(11) **EP 2 655 864 B1**
(45) Veröffentlichungstag und Bekanntmachung des Hinweises auf die Patenterteilung: **18.01.2017**
(21) Anmeldenummer: 11767691.6
(22) Anmeldetag: 07.10.2011
(51) Int. Cl.: F02P 5/15, F02D 41/04, F02D 41/00, F01M 11/12, F02D 31/00, F01M 1/26

(54) **VERFAHREN UND VORRICHTUNG ZUR SCHMIERUNG EINES VERBRENNUNGSMOTORS**
METHOD AND APPARATUS FOR LUBRICATION OF A COMBUSTION ENGINE
PROCEDE ET DISPOSITIF DE LUBRIFICATION D'UN MOTEUR THERMIQUE

(30) Priorität: 21.12.2010 DE 102010055387
(43) Veröffentlichungstag der Anmeldung: 30.10.2013
(73) Patentinhaber: SOLO Kleinmotoren GmbH, 71050 Sindelfingen (DE)
(72) Erfinder: RÜMELIN, Volker, 71083 Herrenberg (DE); SCHINKEL, Samuel, 71263 Weil der Stadt (DE)
(74) Vertreter: DREISS Patentanwälte PartG mbB
(86) Internationale Anmeldenummer: PCT/EP2011/067574
(87) Internationale Veröffentlichungsnummer: WO 2012/084287

(56) Entgegenhaltungen:
- WO-A1-2009/074376
- FR-A1- 2 872 543
- GB-A- 2 450 719
- GB-A- 191 317 310
- JP-A- 55 153 811
- JP-A- 60 040 716
- US-A- 4 136 660
- US-A- 5 517 962

## Beschreibung

**Verfahren und Vorrichtung zu Getrenntschmierung eines Verbrennungsmotors**

Handgehaltene Motorgeräte, wie zum Beispiel Trennschneidgeräte und Kettensägen, werden häufig mit nach dem Zweitakt-Verfahren arbeitenden Verbrennungsmotoren ausgerüstet. Ein wichtiger Vorteil von Zweitakt-Motoren ist deren kompakte und leichte Bauweise. Um die drei bewegten Teilen eines schlitzgesteuerten Zweitakt-Motors, nämlich Kolben, Pleuel und Kurbelwelle zu schmieren, wird der angesaugten Verbrennungsluft das zur Schmierung erforderliche Öl zugemischt. Dies kann beispielsweise über die Zumischung des Öls zum Kraftstoff erfolgen oder als sogenannte Getrenntschmierung erfolgen. Bei der sogenannten Getrenntschmierung ist ein separater Öltank vorhanden. Aus diesem Öltank wird über eine Schmierölpumpe das Öl angesaugt und in den Ansaugtrakt oder direkt ins Kurbelgehäuse des Verbrennungsmotors gefördert.

Diese Getrenntschmierung hat sich in vielen Anwendungsfällen und Einsatzbereichen von Zweitakt-Motoren durchgesetzt, da sie ein besseres Abgasverhalten ermöglicht und außerdem vor allem beim Einsatz auf Baustellen oder in der Forstwirtschaft einfacher und zuverlässiger ist.

Aus der WO 2009/004088 A2 ist ein Trennschleifgerät bekannt, das einen Zweitakt-Motor mit Getrenntschmierung aufweist. Bei dieser Getrenntschmierung wird die elektrische Schmierölpumpe von einem ersten Steuergerät angesteuert. Dabei wird die Förderleistung der Schmierölpumpe entsprechend dem Ölbedarf des Verbrennungsmotors geregelt. So kann beispielsweise die Fördermenge in Abhängigkeit von der Drehzahl des Verbrennungsmotors gesteuert werden. Aus der US 5,517,962 ist ein Verbrennungsmotor bekannt, dessen Drehzahl reduziert wird, wenn der Öldruck zu niedrig ist.

Bei dieser aus dem Stand der Technik bekannten Getrenntschmierung wird die Förderung von Schmieröl durch die Schmierölpumpe überwacht. Falls kein Schmieröl gefördert wird, wird die Zündung ausgeschaltet oder es wird die Drehzahl des Verbrennungsmotors auf die Leerlaufdrehzahl begrenzt.

Der Erfindung liegt die Aufgabe zu Grunde, ein Verfahren zur Getrenntschmierung eines Zweitakt-Motors weiter zu verbessern, um einerseits die sichere Versorgung des Verbrennungsmotors mit Öl zu gewährleisten und andererseits Fehlbedienungen und längere Arbeitsunterbrechungen auf Grund eines Ölmangels zu vermeiden.

Diese Aufgabe wird erfindungsgemäß durch ein Verfahren zum Betreiben eines Verbrennungsmotors, wobei der Verbrennungsmotor eine Ölpumpe, ein erstes Steuergerät für die Ölpumpe und eine Zündanlage umfasst, wobei die Ölpumpe von dem ersten Steuergerät so angesteuert wird, dass der Verbrennungsmotor ausreichend mit Öl versorgt wird, und wobei die Versorgung des Verbrennungsmotors mit Öl überwacht wird, dadurch gelöst, dass die Drehzahl des Verbrennungsmotors auf eine Abregeldrehzahl begrenzt wird, die oberhalb der Leerlaufdrehzahl und unterhalb der Nenndrehzahl des Verbrennungsmotors liegt, wenn die Versorgung des Verbrennungsmotors mit Öl nicht gewährleistet ist.

Dieses Verfahren hat den Vorteil, dass durch die Abregelung des Verbrennungsmotors auf eine Zwischendrehzahl, die zwischen der Nenndrehzahl und der Leerlaufdrehzahl liegt, mehrere Informationen an den Bediener des Motorgeräts übermittelt werden. Der Bediener erhält die Information, dass der Verbrennungsmotor noch funktionsfähig ist, und dass die Ölversorgung beziehungsweise der Öltank aufgefüllt werden muss. Diese Information erleichtert das Arbeiten auf der Baustelle, vor allem wenn dort die Bedienungsanleitung nicht vorhanden ist oder aus Zeitgründen nicht studiert wird.

Diese mittlere Abregeldrehzahl ist somit ein eindeutiges und leicht verständliches Signal an den Bediener, dass kein Defekt vorliegt, sondern lediglich das Öl nachgefüllt werden muss.

Dieses Verfahren kann auch genutzt werden, um bei Kettensägen zu signalisieren, dass das Öl für die Sägekette verbraucht ist.

Ein weiterer Vorteil dieser mittleren Abregeldrehzahl ist darin zu sehen, dass bei einer Unterversorgung des Verbrennungsmotors mit Öl die Ölpumpe so angesteuert werden kann, dass sie ihre maximale Förderleistung erreicht und somit die Mangelversorgung des Verbrennungsmotors mit Öl schnellstmöglich behoben wird. Andererseits ist auch gewährleistet, dass der Bediener des Geräts nicht weiter arbeitet, weil bei der Abregeldrehzahl nicht genug Leistung zur Verfügung steht, um beispielsweise ein Trennschleifgerät zum Trennen von Steinplatten oder eine Kettensäge zu betreiben.

Weil das erfindungsgemäße Verfahren ohne zusätzliche Anzeigeinstrumente oder Einrichtungen auskommt, ist es nicht nur sehr wirkungsvoll, sondern auch sehr zuverlässig.

Dieses Verfahren zum Betreiben eines Verbrennungsmotors sieht vor, dass im Fall einer Mangelversorgung des Verbrennungsmotors mit Öl die Ölpumpe so angesteuert wird, dass die maximal mögliche Ölmenge gefördert wird, um schnellstmöglich die Versorgung des Verbrennungsmotors mit Öl wieder herzustellen.

Zusätzlich kann dann in einer weiteren vorteilhaften Ausgestaltung die Reduzierung der Drehzahl des Verbrennungsmotors auf die Abregeldrehzahl vorgenommen werden.

Die Arbeitsdrehzahlen von Zweitakt-Motoren, die in handgehaltenen Motorgeräten eingebaut sind, liegen üblicherweise oberhalb von 8000 Umdrehungen pro Minute. Daher hat sich als Abregeldrehzahl ein Bereich zwischen 2000/min und 6000/min, bevorzugt zwischen 3500/min und 4500/min, als vorteilhaft erwiesen. Bei diesen Abregeldrehzahlen ist die elektrische Versorgung des ersten Steuergeräts auf jeden Fall gewährleistet und es steht auch ausreichend elektrische Energie zur Verfügung, um eine elektrisch oder mechanisch angetriebene Ölförderpumpe auf die maximale Förderung zu bringen.

In vorteilhafter Ausgestaltung des erfindungsgemäßen Verfahrens wird die Versorgung des Verbrennungsmotors mit Öl durch einen optischen Sensor oder einen kapazitiven Sensor überwacht. Alternativ ist es auch möglich, dass die Versorgung des Verbrennungsmotors mit Öl durch die Überwachung des zeitlichen Verlaufs der Stromaufnahme der elektrisch angetriebenen Ölpumpe erfolgt. In diesem Fall ist es häufig so, dass die Fördermenge der elektrisch angetriebenen Ölpumpe mittels eines modulierten Rechteckspannungssignals, in Form einer sogenannten
Pulsweitenmodulation, gesteuert wird. Je nachdem, ob die Ölpumpe Öl oder Luft fördert, ändert sich der zeitliche Verlauf des von der Ölpumpe aufgenommenen elektrischen Stroms. Somit ist es möglich, durch die Überwachung des zeitlichen Verlaufs des von der elektrischen Ölpumpe aufgenommenen Stroms Rückschlüsse zu ermitteln, ob die Ölpumpe Luft oder Öl fördert und dies entsprechend in dem erfindungsgemäßen Verfahren auszuwerten.

Die erfindungsgemäß vorgesehene Abregeldrehzahl kann dadurch begrenzt werden, dass zum Beispiel nur bei jedem zweiten oder dritten Zünd-OT ein Zündfunke erzeugt wird. Alternativ oder zusätzlich kann auch der Zündzeitpunkt verstellt werden.

Die eingangs genannte Aufgabe wird auch durch ein Steuergerät für eine Ölpumpe eines Verbrennungsmotors mit einem ersten elektrischen Ausgang zur Steuerung der Fördermenge einer Ölpumpe, mit einem zweiten elektrischen Ausgang zur Kommunikation mit einer Zündanlage eines Verbrennungsmotors und mit Mitteln zur Überwachung der Ölversorgung des Verbrennungsmotors dadurch gelöst, dass die Mittel zur Überwachung der Ölversorgung in das erste Steuergerät integriert sind. Dadurch wird erreicht, dass nicht nur kontrolliert wird, ob die Ölpumpe Öl fördert, sondern auch ob dieses Öl durch einen Schlauch zum Verbrennungsmotor fließt. Dieser Schlauch, der üblicherweise die Ölförderpumpe mit dem Ansaugtrakt des Verbrennungsmotors oder dem Kurbelgehäuse des Verbrennungsmotors verbindet, wird durch das Steuergerät gewissermaßen aufgetrennt, so dass das Öl durch das Steuergerät hindurch fließt. Dies kann dadurch bewerkstelligt werden, dass das Steuergerät zwei Anschlussnippel hat, auf welche die beiden aufgetrennten Enden des Schlauchs aufgesteckt werden. Dies bedeutet, dass das gesamte von der Pumpe geförderte Öl durch eine entsprechendes Röhrchen im Steuergerät fließt.

Wenn dieses Röhrchen aus einem transparenten Material ist, dann kann in das Steuergerät ein optischer Sensor integriert sein, der feststellt, ob sich Öl oder Luft in der Leitung befindet und ein entsprechendes Ausgangssignal an den Mikroprozessor des Steuergeräts ausgeben.
Alternativ kann an Stelle eines optischen Sensors auch ein kapazitiver Sensor vorgesehen sein. Auch dieser kapazitive Sensor stellt fest, ob sich Öl oder Luft in dem Röhrchen befindet und gibt ein dementsprechendes Ausgangssignal an den Mikroprozessor des Steuergeräts aus.

Eine weitere Möglichkeit, festzustellen, ob die Förderpumpe Öl oder Luft fördert ist dann gegeben, wenn die Ölpumpe elektrisch angetrieben wird. Die Ansteuerung des elektrischen Antriebs der Ölpumpe erfolgt ebenfalls über das Steuergerät und kann ausgewertet werden. Wenn nämlich die Ölpumpe Luft fördert, dann ist die Stromaufnahme des elektrischen Antriebs eine andere als wenn Öl gefördert wird. Dies bedeutet auch, dass durch die Überwachung des von dem elektrischen Antrieb der Ölpumpe aufgenommenen Stroms ermittelt werden kann, ob die Pumpe Öl oder Luft fördert. Alle diese Mittel zur Überwachung der Ölversorgung des Verbrennungsmotors sind in das Steuergerät integriert, so dass sich eine sehr kompakte, kostengünstige und gleichzeitig betriebssichere Bauart ergibt.

Es hat sich weiter als vorteilhaft erwiesen, wenn die Ölversorgungsleitung beziehungsweise der Schlauch von der Ölpumpe, welche das Öl in den Verbrennungsmotor transportiert, in den Vergaser mündet. Dies ist besonders bei handgeführten Geräten deshalb besonders vorteilhaft, weil der Vergaser schwingungstechnisch entkoppelt von dem eigentlichen Verbrennungsmotor an der sogenannten Griffeinheit des Motorgeräts angeordnet ist.

Auch das erste Steuergerät und die Ölpumpe sind vom eigentlichen Verbrennungsmotor schwingungsmäßig entkoppelt am Rahmen des Geräts befestigt, so dass zwischen Ölpumpe, erstem Steuergerät und dem Vergaser keine Relativbewegungen stattfinden. Dadurch wird die Gefahr von undichten Schläuchen auf Grund mechanischer Dauerbeanspruchung oder durch Aufscheuern deutlich verringert.

Weitere Vorteile und vorteilhafte Ausgestaltungen der Erfindung sind der nachfolgenden Zeichnung und der deren Beschreibung entnehmbar. Alle in der Zeichnung und deren Beschreibung sowie den Patentansprüchen offenbarten Merkmale können sowohl einzeln als auch in beliebiger Kombination miteinander erfindungswesentlich sein.

Es zeigen:
Figur 1 eine isometrische Darstellung einer erfindungsgemäßen Getrenntschmierung und
Figur 2 ein Ablaufdiagramm eines erfindungsgemäßen Verfahrens zum Betreiben eines Verbrennungsmotors mit Getrenntschmierung.

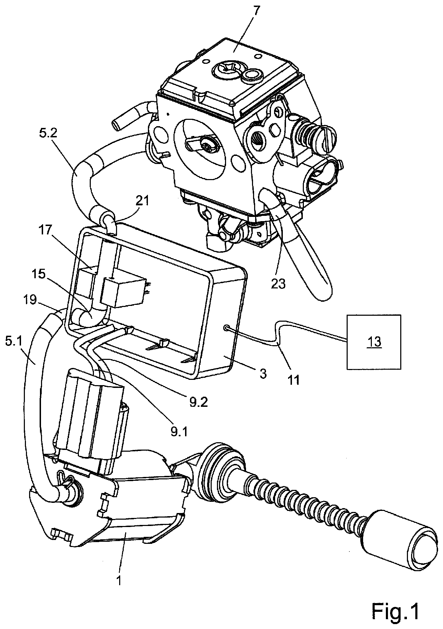

In Figur 1 ist eine erfindungsgemäße Getrenntschmierung in einer Isometrie dargestellt. Dabei umfasst die Getrenntschmierung eine elektrisch angetriebene Ölpumpe 1, ein erstes Steuergerät 3 und eine Ölförderleitung 5. Die Ölförderleitung 5 ist in zwei Abschnitte 5.1 und 5.2 unterteilt. Sie mündet in einen Vergaser 7, der bevorzugt elektrische betätigt ist, des nicht dargestellten Verbrennungsmotors. Das erste Steuergerät 3 ist teilweise freigeschnitten dargestellt.

Über eine erste elektrische Verbindung 9.1 und 9.2 ist das erste Steuergerät 3 mit dem elektrischen Antrieb der Ölpumpe 1 verbunden. Des Weiteren ist das erste Steuergerät 3 über eine Signalleitung 11 mit einer Zündanlage (nicht dargestellt) bevorzugt einer Zündbox einer Zündanlage, elektrische verbunden. Die Zündbox 13 der Zündanlage benötigt von dem ersten Steuergerät 3 ein Freigabesignal. Ohne dieses Freigabesignal verhindert die Zündbox 13, dass der Verbrennungsmotor seine Arbeitsdrehzahl erreicht.

In dem freigeschnittenen Teil des ersten Steuergeräts 3 sind eine Ölleitung 15 und ein optischer Sensor 17 zu sehen. Die Ölleitung 15 ist aus einem transparenten Material, bevorzugt einem Kunststoff, hergestellt und endet außerhalb des ersten Steuergeräts 3 in Form von Anschlussnippeln 19 und 21. An den ersten Anschlussnippel 19 ist das erste Teilstück 5.1 des Schlauchs angeschlossen, der an seinem anderen Ende mit der Ölpumpe 1 verbunden ist. An dem zweiten Anschlussnippel 21 ist der zweite Abschnitte 5.2 des Schlauchs 5 angeschlossen. Das andere Ende des zweiten Abschnitte 5.2 ist auf einen dritten Nippel 23 am Vergaser 7 aufgesteckt ist.

Dies bedeutet, dass das von der Ölpumpe 1 geförderte Öl durch das Gehäuse des ersten Steuergeräts 3 geführt wird. Der optische Sensor 17 umschließt die Ölleitung 15 mindestens bereichsweise und ist daher in der Lage zu erkennen, ob sich in der Ölleitung 15 Öl oder Luft befindet. Wenn sich Öl in der Ölleitung 15 befindet, gibt der optische Sensor 17 ein entsprechendes Ausgangssignal an den im ersten Steuergerät 3 vorhandenen Mikroprozessor (nicht dargestellt) und signalisiert somit, dass dem Betrieb des Verbrennungsmotors bei Nenndrehzahl nichts im Wege steht. Dies geschieht dadurch, dass das erste Steuergerät 3 über die Signalleitung 11 ein Freigabesignal an die Zündbox 13 der Zündanlage übermittelt, welche die Zündung entsprechend steuert.

Wenn der optische Sensor 17 Luft in der Ölleitung 15 detektiert, dann ändert sich das Ausgangssignal des optischen Sensors 17 und das erste Steuergerät 3 registriert dies. Infolgedessen setzt das erste Steuergerät 3 über die Signalleitung 11 ein entsprechendes Nicht-Freigabesignal an die Zündbox 13 ab. Infolgedessen wird die Drehzahl des Verbrennungsmotors auf eine Abregeldrehzahl, die in einem Bereich zwischen 2000 und 6000 Umdrehungen, bevorzugt in einem Bereich zwischen 3500 und 4500 Umdrehungen pro Minute liegt, begrenzt. Dadurch erhält der Bediener des Handgeräts, wie zum Beispiel eines Trennschleifgeräts oder einer Kettensäge, haptisch und akustisch die Rückmeldung, dass die Ölversorgung des Verbrennungsmotors nicht gewährleistet ist.

Gleichzeitig gibt das erste Steuergerät 3 an die Ölpumpe 1 ein Steuersignal, so dass die Förderleistung der Pumpe 15 maximiert wird. Dadurch kann eventuell im Öltank (nicht dargestellt) noch vorhandenes Öl gefördert werden und die Schmierstoffversorgung des Verbrennungsmotors gewährleistet werden.

Es hat sich als vorteilhaft erwiesen, wenn nicht unmittelbar beim Auftreten einer Luftblase in der Ölleitung 15 die Drehzahl des Verbrennungsmotors abgeregelt wird. Es ist vielmehr vorteilhaft, wenn die Ausgabe des eines Nicht-Freigabesignals über die Signalleitung 11 an die Zündbox 13 verzögert ausgegeben wird. Als praktikable Verzögerungsdauer haben sich beispielsweise 15 oder 25 Sekunden herausgestellt. Dadurch wird verhindert, dass das Vorhandensein einer kleinen Luftblase in der
Ölleitung 15 schon zu einer Arbeitsunterbrechung führt.

Unabhängig von dieser Verzögerungszeit ist es vorteilhaft, wenn unverzüglich nachdem eine Luftblase in der Ölleitung 15 erkannt wurde, die Förderleistung der Ölpumpe 1 maximiert wird. Dadurch ist sichergestellt, dass der Verbrennungsmotor bestmöglich mit Öl versorgt wird.

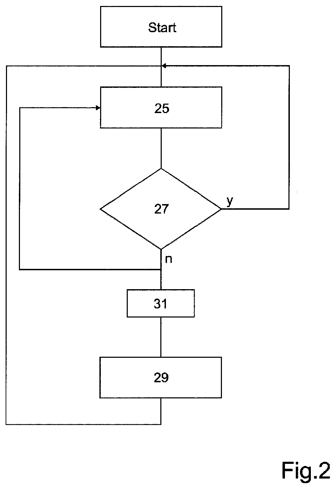

In der Figur 2 ist ein Ablaufdiagramm eines erfindungsgemäßen Verfahrens in Form eines Blockdiagramms dargestellt. Das erfindungsgemäße Verfahren startet zeitgleich mit der Inbetriebnahme der Brennkraftmaschine. In einem ersten Block 25 wird die Ansteuerung der Ölpumpe 1 vorgenommen. Dabei kann die Fördermenge der Ölpumpe 1 in Abhängigkeit einer Kennlinie oder eines Kennfelds oder einfach über die Drehzahl des Verbrennungsmotors oder der angesaugten Kraftstoffmenge gesteuert werden.

In einem weiteren Block 27 wird abgeprüft, ob die Ölversorgung des Verbrennungsmotors in Ordnung ist. Diese Überprüfung und Überwachung der Ölversorgung findet erfindungsgemäß innerhalb des ersten Steuergeräts 3 statt; beispielsweise mit Hilfe des ersten optischen Sensors 17. Wenn das Ergebnis dieser Überwachung positiv ist (Ölversorgung ist in Ordnung), dann verzweigt das erfindungsgemäße Verfahren wieder vor den ersten Block 25.

Wenn sich in dem Block 27 herausstellen sollte, dass die Ölversorgung nicht in Ordnung ist, dann verzweigt das Programm in eine oder zwei weitere Schleifen. In einer ersten Schleife verzweigt das Verfahren in zurück zu dem Block 25 in dem die Ansteuerung der Ölpumpe vorgenommen wird. Dadurch wird die Ölpumpe 1 so angesteuert, dass die Ölpumpe 1 mit maximaler Fördermenge fördert, so dass die möglicherweise mangelhafte Ölversorgung schnellstmöglich verbessert wird.

Alternativ oder zusätzlich ist vorgesehen, dass bei einer mangelhaften Ölversorgung die Drehzahl des Motors abgeregelt wird, indem ein entsprechendes Ausgangssignal über die Signalleitung 13 an die Zündbox 13 übermittelt wird. Eine geeignete Abregeldrehzahl kann beispielsweise 4000 Umdrehungen pro Minute betragen. Dabei kann es vorteilhaft sein, wenn der Abregelung der des Motors in einem Funktionsblock 29 erst dann erfolgt, wenn ein Verzögerungsglied 31 durchlaufen wurde. In diesem Verzögerungsglied 31 wird erreicht, dass erst nach Ablauf einer einstellbaren Zeitdauer von beispielsweise 15 Sekunden, innerhalb derer die Ölversorgung des Verbrennungsmotors nicht in Ordnung ist, die Drehzahl des Verbrennungsmotors im Funktionsblock 29 abgeregelt wird.

Dadurch wird verhindert, dass beim Auftreten einer kleinen Luftblase in der Ölleitung 15 der Verbrennungsmotor abregelt und die Arbeit unterbrochen wird. Eine kurze Mangelversorgung des Verbrennungsmotors mit Öl hat keine negativen Auswirkungen auf die Lebensdauer des Verbrennungsmotors.

Nachdem die in dem Funktionsblock 29 die Drehzahl des Verbrennungsmotors abgeregelt wird, verzweigt das Verfahren wieder in einen Punkt oberhalb des Funktionsblock 25 in dem die Ölpumpe 1 angesteuert wird (siehe Block 25) und das Verfahren beginnt erneut.

Sobald die Fördermenge der Ölpumpe ausreichend ist, um eine ausreichende Ölversorgung zu gewährleisten, wird im Funktionsblock 27 wieder in die in den Zweig, in den Y-Zweig verzweigt und das Verfahren beginnt erneut oberhalb des ersten Funktionsblock 25.

Das Abregeln des Motors (siehe Funktionsblock 29) und das Erhöhen der Förderleistung können unabhängig oder kumulativ eingesetzt werden, um den Verbrennungsmotor zu schützen, die Ölversorgung schnellstmöglich wieder herzustellen und gleichzeitig an den Bediener des Geräts eine Botschaft die Information zu übermitteln, dass der Öltank aufgefüllt werden muss.

## Patentansprüche

1. Verfahren zum Betreiben eines Verbrennungsmotors, mit einer Ölpumpe (1), mit einem ersten Steuergerät (3) für die Ölpumpe (1) und mit einer Zündanlage, wobei die Ölpumpe (1) von dem ersten Steuergerät (3) so angesteuert wird, dass der Verbrennungsmotor ausreichend mit Öl versorgt wird, und wobei die Versorgung des Verbrennungsmotors mit Öl überwacht wird, wobei die Drehzahl des Verbrennungsmotors auf eine Abregel-Drehzahl begrenzt wird, die oberhalb der Leerlaufdrehzahl und unterhalb der Nenndrehzahl liegt, wenn die Versorgung des Verbrennungsmotors mit Öl nicht gewährleistet ist, **dadurch gekennzeichnet, dass** die Ölpumpe (1) von dem ersten Steuergerät (3) so angesteuert wird, dass die maximal mögliche Ölmenge gefördert wird, wenn die Versorgung des Verbrennungsmotors mit Öl nicht gewährleistet ist.

2. Verfahren nach Anspruch 1, **dadurch gekennzeichnet, dass** die Ölpumpe (1) von dem ersten Steuergerät (3) so angesteuert wird, dass die Fördermenge der Ölpumpe (1) von dem ersten Steuergerät (3) in Abhängigkeit einer Kennlinie, eines Kennfelds, der Drehzahl des Verbrennungsmotors oder der angesaugten Kraftstoffmenge gesteuert wird.

3. Verfahren nach Anspruch 1, **dadurch gekennzeichnet, dass** die Drehzahl des Verbrennungsmotors begrenzt wird, wenn die Versorgung des Verbrennungsmotors mit Öl nicht gewährleistet ist.

4. Verfahren nach einem der Ansprüche 1 und 3, **dadurch gekennzeichnet, dass** die Abregel-Drehzahl in einem Bereich zwischen 2000/min und 6000/min, bevorzugt zwischen 3500 / min und 4500 /min, liegt.

5. Verfahren nach einem der vorhergehenden Ansprüche, **dadurch gekennzeichnet, dass** die Versorgung des Verbrennungsmotors mit Öl durch einen optischen Sensor (17) oder einen kapazitiven Sensor überwacht wird.

6. Verfahren nach einem der vorhergehenden Ansprüche, **dadurch gekennzeichnet, dass** das erste Steuergerät (3) die Fördermenge der Ölpumpe (1) mittels eines modulierten Rechteckspannungssignals (PWM) steuert.

7. Verfahren nach Anspruch 6, **dadurch gekennzeichnet, dass** das erste Steuergerät (3) die Versorgung des Verbrennungsmotors mit Öl durch die Auswertung des zeitlichen Verlaufs des von der Ölpumpe (1) aufgenommenen elektrischen Stroms überwacht.

8. Verfahren nach einem der vorhergehenden Ansprüche, **dadurch gekennzeichnet, dass** die Drehzahl des Verbrennungsmotors dadurch begrenzt wird, dass nur bei jedem zweiten oder dritten Zünd-OT ein Zündfunke erzeugt wird.

9. Verfahren nach einem der vorhergehenden Ansprüche, **dadurch gekennzeichnet, dass** die Drehzahl des Verbrennungsmotors dadurch begrenzt wird, dass der Zündzeitpunkt verstellt wird.

## Claims

1. A method of operating a combustion engine with an oil pump (1), a first control unit (3) for the oil pump (1) and an ignition system whereby the oil pump (1) is controlled by the first control unit (3) such that the combustion engine is sufficiently supplied with oil and whereby the supply of oil of the combustion engine is monitored whereby the rotational speed of the combustion engine is limited to a regulated rotational speed which is above an idling rotational speed and below a nominal rotational speed when the supply of the oil to the combustion engine is not assured, **characterized in, that** the oil pump (1) is controlled by the first control unit (3) such that the maximal possible amount of oil is supplied, when the oil supply to the engine is not assured.

2. The method according to Claim 1, **characterized in that** the oil pump (1) is controlled by the first control unit (3) such that the output of the oil pump (3) is controlled dependent from a characteristic line, a characteristic diagram, the rotational speed of the engine or the amount of fuel taken in by the engine.

3. The method according to Claim 1, **characterized in that** the rotational speed of the engine is regulated, when the oil supply to the engine is not assured.

4. The method according to Claim 1 or 3 **characterized in that** the regulated rotational speed is in a range between 2,000/min and 6,000/min, preferably between 3,500/min and 4,500/min.

5. The method according to one of the preceding claims **characterized in, that** the supply of the combustion engine (3) with oil is monitored by means of an optical sensor (17) or a capacitive sensor.

6. The method according to one of the preceding claims, **characterized in that** a delivery quantity of the oil pump is controlled by means of a modulated square-wave voltage signal (PMW).

7. The method according to Claim 6, **characterized in that** the first control unit (3) monitors the oil supply to the combustion engine by evaluation of a time progression of an electric current consumed by the oil pump.

8. The method according to one of the preceding claims, **characterized in, that** the rotational speed of the engine is limited by producing an ignition spark at every second or third ignition Top Dead Center (TDC).

9. The method according to one of the preceding claims, **characterized in, that** the rotational speed of the engine is limited by adjusting the spark timing.

## Revendications

1. Procédé pour faire fonctionner un moteur à combustion interne, comprenant une pompe à huile (1), un premier appareil de commande (3) pour la pompe à huile (1) et un système d'allumage, dans lequel ladite pompe à huile (1) est commandée par ledit premier appareil de commande (3) de telle sorte que le moteur à combustion interne est alimenté en huile de manière suffisante, et dans lequel l'alimentation en huile du moteur à combustion interne est surveillée, dans lequel la vitesse de rotation du moteur à combustion interne est limitée à une vitesse de coupure de l'alimentation qui est supérieure à la vitesse de ralenti et inférieure à la vitesse nominale lorsque l'alimentation en huile du moteur à combustion interne n'est pas garantie, **caractérisé par le fait que** la pompe à huile (1) est commandée par le premier appareil de commande (3) de telle manière que la quantité d'huile maximale possible est refoulée lorsque l'alimentation en huile du moteur à combustion interne n'est pas garantie.

2. Procédé selon la revendication 1, **caractérisé par le fait que** la pompe à huile (1) est commandée par le premier appareil de commande (3) de telle manière que le débit refoulé de la pompe à huile (1) est commandé par le premier appareil de commande (3) en fonction d'une courbe caractéristique, d'un diagramme caractéristique, de la vitesse de rotation du moteur à combustion interne ou de la quantité de carburant aspirée.

3. Procédé selon la revendication 1, **caractérisé par le fait que** la vitesse de rotation du moteur à combustion interne sera limitée lorsque l'alimentation en huile du moteur à combustion interne n'est pas garantie.

4. Procédé selon l'une quelconque des revendications 1 et 3, **caractérisé par le fait que** la vitesse de coupure de l'alimentation se situe dans une plage allant de 2000/Min. et 6000/Min, de préférence de 3500/Min. à 4500 /Min.

5. Procédé selon l'une quelconque des revendications précédentes, **caractérisé par le fait que** l'alimentation en huile du moteur à combustion interne est surveillée par un capteur optique (17) ou un capteur capacitif.

6. Procédé selon l'une quelconque des revendications précédentes, **caractérisé par le fait que** le premier appareil de commande (3) commande le débit refoulé de la pompe à huile (1) au moyen d'un signal de tension rectangulaire modulé (MLI).

7. Procédé selon la revendication 6, **caractérisé par le fait que** le premier appareil de commande (3) surveille l'alimentation en huile du moteur à combustion interne en évaluant la loi en fonction du temps du courant électrique consommée par la pompe à huile (1).

8. Procédé selon l'une quelconque des revendications précédentes, **caractérisé par le fait que** la vitesse de rotation du moteur à combustion interne est limitée en ne générant une étincelle d'allumage que dans un PMH d'allumage sur deux ou sur trois.

9. Procédé selon l'une quelconque des revendications précédentes, **caractérisé par le fait que** la vitesse de rotation du moteur à combustion interne est limitée **par le fait que** le point d'allumage est réglé.
